# FASCICULE DE BREVET EUROPEEN

(11) **EP 2 296 877 B1**
(45) Date de publication et mention de la délivrance du brevet: **20.02.2019**
(21) Numéro de dépôt: 09761931.6
(22) Date de dépôt: 11.06.2009
(51) Int. Cl.: B32B 17/10, F41H 5/04, F41H 5/26, B32B 3/18, B32B 27/36

(54) **VITRAGE A RESISTANCE AUX BALLES AUGMENTEE**
VERBESSERTE KUGELSICHERE VERGLASUNG
IMPROVED BULLET-PROOF GLAZING

(30) Priorité: 12.06.2008 FR 0853902
(43) Date de publication de la demande: 23.03.2011
(73) Titulaire: Saint-Gobain Glass France, 92400 Courbevoie (FR)
(72) Inventeur: PLUEN, Vincent, F-41600 Lamotte Beuvron (FR); LERAY, Stéphane, F-45500 Saint Gondon (FR); MENNECHEZ, Françoise, 45430 Checy (FR)
(74) Mandataire: Saint-Gobain Recherche
(86) Numéro de dépôt international: PCT/FR2009/051098
(87) Numéro de publication internationale: WO 2009/150380

(56) Documents cités:
- WO-A-2006/135832
- WO-A1-03/068501
- US-A1- 2008 092 729
- PARIMAL J. PATEL, GARY A. GILDE, PETER G. DEHMER, JAMES W. MCCAULEY: "Transparent Armor" THE AMPTIAC NEWSLETTER, FALL 2000, [Online] vol. 4, no. 3, 2000, XP002405973 Rome, New York Extrait de l'Internet: URL:http://www.p2pays.org/ref/34/33126.pdf > [extrait le 2006-11-06]
- R. GENTILMAN, P.MCGUIRE, D. FIORE, K. OSTREICHER, J. ASKINAZI: "Large-area sapphire windows" PROCEEDINGS OF SPIE, [Online] vol. 5078, 2003, pages 54-60, XP002405974 Extrait de l'Internet: URL:http://www.matsysinc.com/products/cera mics/docs/large_area_sapphire.pdf> [extrait le 2006-11-06]
- "Emerging Scanning Results: Transparent Ceramics" PARTNERSHIP FOR ADVANCING TECHNOLOGY IN HOUSING, [Online] 14 avril 2003 (2003-04-14), XP002405975 Extrait de l'Internet: URL:http://www.pathnet.org/sp.asp?id=7539> [extrait le 2006-11-06]
- R. GENTILMAN, P.MCGUIRE, D. FIORE, K. OSTREICHER, J. ASKINAZI: "Low-cost sapphire windows" PROCEEDINGS OF SPIE, [Online] vol. 5078, 2003, pages 12-17, XP002405976 Extrait de l'Internet: URL:http://www.matsysinc.com/products/cera mics/docs/low_cost_sapphire.pdf> [extrait le 2006-11-06]

## Description

La présente invention a trait à des vitrages résistant aux balles et/ou éclats et/ou autres projectiles du même type.

De tels vitrages consistent en assemblages de feuilles de verre et de matière plastique transparente, reliées les unes aux autres par des couches intercalaires adhésives du type polyvinylbutyral (PVB), polyuréthane (PU) ou résine époxy.

Des niveaux extrêmement élevés de résistance aux balles peuvent être atteints en augmentant l'épaisseur des feuilletés, au détriment de la transmission lumineuse à travers le vitrage.

Certains matériaux, en particulier le saphir monocristallin, ne peuvent pas être fabriqués en plaques ou feuilles de surfaces principales plus grandes que 225 x 660 mm² environ. Pour des dimensions supérieures, on peut donc penser associer en mosaïque plusieurs plaques de matériaux transparents identiques ou différents. Les inventeurs ont découvert que de telles mosaïques sont aptes à procurer des niveaux de résistance balistique très élevés, mais aussi que de surcroît, elles limitent la propagation de la détérioration (fissures ...) du feuilleté à l'extérieur de leur constituant qui reçoit un impact. En d'autres termes, la détérioration s'étend plus sur une feuille monolithique de mêmes surface et matériau que ceux de la mosaïque. Sur la mosaïque, la détérioration a tendance, dans de nombreux cas, à se circonscrire au constituant (« carreau ») recevant un impact.

De plus, il a été constaté avec surprise que les espaces fins entre les carreaux de la mosaïque, généralement occupés par des joints notamment organiques, ne constituent nullement une faiblesse du point de vue de la résistance balistique.

Par conséquent, l'invention a pour objet l'utilisation d'un feuilleté anti-balles et/ou anti-éclats transparent, dont au moins une partie de l'épaisseur est constituée d'une mosaïque comprenant au moins deux éléments constitutifs transparents, pour limiter la détérioration du feuilleté hors de l'un desdits au moins deux éléments constitutifs qui reçoit un impact, caractérisée en ce que lesdits au moins deux éléments constitutifs transparents sont en saphir monocristallin, et en ce que les deux faces extérieures principales du feuilleté sont constituées
- d'une feuille transparente continue en verre d'épaisseur comprise entre 2 et 6 mm, de manière particulièrement appropriée du côté d'où l'impact est attendu ; et
- d'une feuille transparente continue en polycarbonate ou équivalent, de préférence du côté opposé à celui destiné à recevoir l'impact.

Le feuilleté est ici transparent en ce sens qu'une partie au moins de sa surface principale l'est.

D'autre part, les inventeurs se sont aperçu que l'emploi d'une céramique transparente permettait d'atteindre d'excellents niveaux de résistance aux balles et/ou éclats pour des masses surfaciques minimales du composite, en général feuilleté, et des transmissions lumineuses visibles maximales à travers celui-ci. Les termes « minimales » et « maximales » se référent aux autres matériaux transparents utilisés dans cette application, en particulier le verre.

Par conséquent, selon l'utilisation de l'invention, ledit feuilleté comporte une céramique transparente, pour diminuer la masse surfacique du feuilleté à résistance aux balles et/ou éclats constante, et augmenter la transmission lumineuse visible à travers le feuilleté.

Une céramique transparente désigne ici le saphir (Al₂O₃) monocristallin.

L'invention a également pour objet un feuilleté transparent anti-balles et/ou anti-éclats , caractérisé en ce qu'au moins une partie de son épaisseur est constituée d'une mosaïque comprenant au moins deux éléments constitutifs transparents en saphir monocristallin, et en ce que ses deux faces extérieures sont constituées
- d'une feuille transparente continue en verre d'épaisseur comprise entre 2 et 6 mm, de manière particulièrement appropriée du côté d'où l'impact est attendu ; et
- d'une feuille transparente continue en polycarbonate ou équivalent, de préférence du côté opposé à celui destiné à recevoir l'impact.

Ainsi évite-t-on que ladite mosaïque ne forme elle-même une face extérieure du feuilleté. En effet, les irrégularités de surface de la mosaïque peuvent être une source d'encrassement à plus ou moins long terme, ou d'accrochage d'un outil de nettoyage tel qu'essuie-glace ...On évite en particulier l'encrassement des joints organiques de type PVB, et on augmente leur durabilité en limitant leur dégradation par les UV et l'humidité.

De préférence, la dite feuille transparente continue en verre d'épaisseur comprise entre 2 et 6 mm est en verre trempé chimiquement.

Le verre employé peut être sodocalcique, à basse teneur en Fe, borosilicate, éventuellement traité, par exemple par trempe chimique.

Des exemples de matières plastiques utilisables sont les adhésifs polyvinylbutyral (PVB), polyuréthane (PU), ou encore polycarbonate (PC), acrylique tel que poly(méthacrylate de méthyle) (PMMA) ou une résine ionomère.

Le feuilleté de l'invention a une épaisseur comprise entre 30 et 120 mm, de préférence entre 40 et 100 mm.

Il est constitué de feuilles/mosaïques rigides et au moins en partie transparentes, de céramique, verre, vitrocéramique et/ou matière plastique, collées les unes aux autres par des couches adhésives intercalaires telles que PVB ou PU.

L'épaisseur de ces dernières est par exemple un multiple de 0,38 mm, notamment 0,76 mm.

L'épaisseur des feuilles/mosaïques de céramique est comprise entre 2 et 18 mm, est égale notamment à 3,18 mm, 6,35 mm ou 7,62 mm et n'excède de préférence pas 15 - 17 mm.

L'épaisseur des feuilles/mosaïques_de verre est comprise entre 2 et 15 mm, de préférence entre 6 et 12 mm, à l'exception de la feuille de verre constituant le cas échéant la surface extérieure du feuilleté dont l'épaisseur est de 2 à 6 mm, notamment de 4 mm.

L'épaisseur des feuilles/mosaïques de vitrocéramique peut être comprise entre 5 et 7 mm.

L'épaisseur des feuilles/mosaïques de matière plastique est comprise entre 2 et 10 mm.

Les éléments constitutifs d'une mosaïque, transparents ou non, sont collés les uns aux autres de préférence par un joint organique, par exemple par un cordon de PVB de 0,38 ou 0,76 mm.

Leurs bords présentent des chanfreins réduits le plus possible, ou d'autres formes en gradins ou biseaux permettant l'emboîtement et/ou recouvrement des bords de deux éléments constitutifs voisins. Néanmoins, la forme droite sans chanfrein ou à chanfrein réduit le plus possible est préférée d'un point de vue optique.

Le feuilleté de l'invention peut avoir une longueur aussi grande que 2 m par exemple.

Selon deux modes de réalisation particuliers du feuilleté de l'invention :
- ladite mosaïque comprend au moins un élément constitutif non transparent, notamment en matériau anti-balles et/ou anti-éclats, par exemple métallique ;
- dans le feuilleté est incorporée une rapplique pénétrante en matériau anti-balles et/ou anti-éclats recouvrant la périphérie de la structure anti-balles et/ou anti-éclats du feuilleté, et destinée à recouvrir aussi, en position de montage de celui-ci, la baie dans laquelle il est installé ; à cet égard il est fait référence au brevet EP 918 629 B1.

L'invention a également pour objet un vitrage de bâtiment ou de véhicule de transport (terrestre, aquatique, aérien, spatial) comprenant un feuilleté décrit ci-dessus.

L'invention sera mieux comprise à la lumière de l'exemple suivant.

### Exemple

On met en oeuvre un feuilleté de composition suivante :

4 white glass / 1,52 PVB / 7,62 saphir / 1,52 PVB / 7,62 saphir / 1,52 PVB / 12 white glass / 0,76 PVB / 12 white glass / 0,76 PVB / 12 white glass / 0,76 PVB / 12 white glass / 0,76 PVB / 3 white glass / 2,5 PU / 3 PC
dans laquelle les chiffres indiquent les épaisseurs des constituants, white glass est le verre blanc, le saphir est monocristallin, PVB désigne le polyvinylbutyral, PU le polyuréthane et PC le polycarbonate.

Chacune des épaisseurs de saphir est constituée d'une mosaïque de quatre carreaux de 100 mm x 100 mm, collés les uns aux autres par des cordons de 0,76 mm de PVB.

Les bords de ces carreaux présentent des chanfreins inférieurs à 0,5 mm.

Ce feuilleté a une épaisseur de 82 mm, une masse surfacique de 210 kg/m², et une transmission lumineuse visible supérieure à 70 %.

Il satisfait la norme NATO-STANAG 4569 (North Atlantic Treaty Organization - Standard Agreement) de niveau 4,
a) aussi bien pour les munitions 14,5 x 114 API B32 émises à 911 m/s,
b) que pour les fragments FSP 20 mm émis à 960 m/s.

Dans les deux cas a) et b), on constate que la détérioration du feuilleté est limitée en dehors du carreau de saphir ayant reçu l'impact

Des feuilletés en verre et sans céramique de type saphir, ont à même résistance balistique
- une épaisseur supérieure à 130 mm, une masse surfacique supérieure à 320 kg/m² et une transmission lumineuse visible inférieure à 50 % dans le cas a) ci-dessus, et
- une épaisseur supérieure à 100 mm, une masse surfacique supérieure à 250 kg/m² et une transmission lumineuse visible inférieure à 58 % dans le cas b) ci-dessus.

Les joints entre les carreaux ne sont pas une faiblesse du feuilleté, qui résiste à des tirs sur ces joints comme si la mosaïque était remplacée par une feuille monolithique de saphir.

## Revendications

1. Utilisation d'un feuilleté anti-balles et/ou anti-éclats transparent, dont au moins une partie de l'épaisseur est constituée d'une mosaïque comprenant au moins deux éléments constitutifs transparents, pour limiter la détérioration du feuilleté hors de l'un desdits au moins deux éléments constitutifs qui reçoit un impact, **caractérisée en ce que** lesdits au moins deux éléments constitutifs transparents sont en saphir monocristallin, et **en ce que** les deux faces extérieures principales du feuilleté sont constituées
- d'une feuille transparente continue en verre d'épaisseur comprise entre 2 et 6 mm, de manière particulièrement appropriée du côté d'où l'impact est attendu ; et
- d'une feuille transparente continue en polycarbonate ou équivalent, de préférence du côté opposé à celui destiné à recevoir l'impact.

2. Utilisation selon la revendication 1, **caractérisée en ce que** ledit feuilleté comporte une céramique transparente, pour diminuer la masse surfacique du feuilleté à résistance aux balles et/ou éclats constante, et augmenter la transmission lumineuse visible à travers le feuilleté.

3. Feuilleté transparent anti-balles et/ou anti-éclats, **caractérisé en ce qu'**au moins une partie de son épaisseur est constituée d'une mosaïque comprenant au moins deux éléments constitutifs transparents en saphir monocristallin, et **en ce que** ses deux faces extérieures principales sont constituées
- d'une feuille transparente continue en verre d'épaisseur comprise entre 2 et 6 mm, de manière particulièrement appropriée du côté d'où l'impact est attendu ; et
- d'une feuille transparente continue en polycarbonate ou équivalent, de préférence du côté opposé à celui destiné à recevoir l'impact.

4. Feuilleté selon la revendication 3, **caractérisé en ce qu'**une dite feuille transparente continue en verre d'épaisseur comprise entre 2 et 6 mm est en verre trempé chimiquement.

5. Feuilleté selon l'une des revendications 3 ou 4, **caractérisé en ce que** ladite mosaïque comprend au moins un élément constitutif non transparent, notamment en matériau anti-balles et/ou anti-éclats.

6. Feuilleté selon l'une des revendications 3 à 5, **caractérisé en ce qu'**y est incorporée une rapplique pénétrante en matériau anti-balles et/ou anti-éclats recouvrant la périphérie de la structure anti-balles et/ou anti-éclats du feuilleté, et destinée à recouvrir aussi, en position de montage de celui-ci, la baie dans laquelle il est installé.

7. Vitrage de bâtiment ou de véhicule de transport comprenant un feuilleté selon l'une des revendications 3 à 6.

## Patentansprüche

1. Verwendung einer transparenten kugelsicheren und/oder splittersicheren Verbundverglasung, von der mindestens ein Teil der Dicke aus einem Mosaik besteht, umfassend mindestens zwei transparente Bestandteilelemente, um die Verschlechterung der Verbundverglasung außerhalb eines der mindestens zwei Bestandteilelemente zu begrenzen, das einen Schlag erhält,
**dadurch gekennzeichnet, dass** die mindestens zwei transparenten Bestandteilelemente aus monokristallinem Saphir bestehen, und dadurch, dass die beiden Hauptaußenflächen der Verbundverglasung bestehen aus:
- einer kontinuierlichen transparenten Scheibe aus Glas mit einer Dicke zwischen 2 und 6 mm, insbesondere geeignet auf der Seite, wo ein Schlag erwartet wird; und
- einer kontinuierlichen transparenten Scheibe aus Polycarbonat oder einem Äquivalent, vorzugsweise auf der Seite gegenüber jener, die dazu bestimmt ist, einen Schlag zu erhalten.

2. Verwendung nach Anspruch 1,
**dadurch gekennzeichnet, dass** die Verbundverglasung eine transparente Keramik umfasst, um die Oberflächenmasse der kugelsicheren und/oder splittersicheren Verbundverglasung konstant zu verringern, und die Transmission von sichtbarem Licht durch die Verbundverglasung zu erhöhen.

3. Transparente kugelsichere und/oder splittersichere Verbundverglasung,
**dadurch gekennzeichnet, dass** mindestens ein Teil ihrer Dicke aus einem Mosaik besteht, umfassend mindestens zwei transparente Bestandteilelemente aus monokristallinem Saphir, und dadurch, dass ihre beiden Hauptaußenflächen bestehen aus:
- einer kontinuierlichen transparenten Scheibe aus Glas mit einer Dicke zwischen 2 und 6 mm, insbesondere geeignet auf der Seite, wo ein Schlag erwartet wird; und
- einer kontinuierlichen transparenten Scheibe aus Polycarbonat oder einem Äquivalent, vorzugsweise auf der Seite gegenüber jener, die dazu bestimmt ist, einen Schlag zu erhalten.

4. Verbundverglasung nach Anspruch 3,
**dadurch gekennzeichnet, dass** eine solche kontinuierliche transparente Scheibe aus Glas mit einer Dicke zwischen 2 und 6 mm aus chemisch gehärtetem Glas besteht.

5. Verbundverglasung nach einem der Ansprüche 3 oder 4,
**dadurch gekennzeichnet, dass** das Mosaik mindestens ein nicht-transparentes Bestandteilelement, insbesondere aus einem kugelsicheren und/oder splittersicheren Material, umfasst.

6. Verbundverglasung nach einem der Ansprüche 3 bis 5,
**dadurch gekennzeichnet, dass** darin eine penetrierende Zusammenführung aus kugelsicherem und/oder splittersicheren Material enthalten ist, die den Umfang der kugelsicheren und/oder splittersicheren Struktur der Verbundverglasung bedeckt, und dazu bestimmt ist, in der Montageposition derselben die Öffnung zu bedecken, in der sie installiert ist.

7. Gebäude- oder Transportfahrzeugverglasung, umfassend eine Verbundverglasung nach einem der Ansprüche 3 bis 6.

## Claims

1. Use of a transparent bullet-proof and/or splinter-proof laminate, of which at least part of the thickness consists of a mosaic comprising at least two transparent constituent elements, in order to limit deterioration of the laminate beyond one of said at least two constituent elements that receive an impact, **characterized in that** said at least two transparent constituent elements are made of monocrystalline sapphire, and **in that** the two main outer faces of the laminate consist of
- one continuous transparent sheet made of glass with a thickness of between 2 and 6 mm, in a particularly suitable manner on the side where the impact is expected; and
- one continuous transparent sheet made of polycarbonate or the equivalent, preferably on the side opposite that intended to receive the impact.

2. Use according to Claim 1, **characterized in that** said laminate includes a transparent ceramic in order to reduce the mass per unit area of the laminate with constant resistance to bullets and/or splinters, and to increase the visible light transmission through the laminate.

3. Transparent bullet-proof and/or splinter-proof laminate, **characterized in that** at least part of its thickness consists of a mosaic comprising at least two transparent constituent elements made of monocrystalline sapphire, and **in that** its two main outer faces consist of
- one continuous transparent sheet made of glass with a thickness of between 2 and 6 mm, in a particularly suitable manner on the side where the impact is expected; and
- one continuous transparent sheet made of polycarbonate or the equivalent, preferably on the side opposite that intended to receive the impact.

4. Laminate according to Claim 3, **characterized in that** said continuous transparent sheet made of glass with a thickness of between 2 and 6 mm is made of chemically toughened glass.

5. Laminate according to either of Claim 3 or 4, **characterized in that** said mosaic comprises at least one non-transparent constituent element, notably made of a bullet-proof and/or splinter-proof material.

6. Laminate according to one of Claims 3 to 5, **characterized in that** a penetrating insert made of a bullet-proof and/or splinter-proof material is incorporated, covering the periphery of the bullet-proof and/or splinter-proof structure of the laminate, and also designed to cover, in the position in which this is mounted, the aperture in which it is installed.

7. Glazing for a building or transport vehicle comprising a laminate according to one of Claims 3 to 6.
